# EUROPEAN PATENT APPLICATION

(11) **EP 3 357 734 A1**
(43) Date of publication of application: **08.08.2018**
(21) Application number: 16851127.7
(22) Date of filing: 12.09.2016
(51) Int. Cl.: B60K 35/00, G02B 27/01, G09G 5/00, G09G 5/10, G09G 5/36, G02B 26/10

(54) **DISPLAY DEVICE**

(30) Priority: 02.10.2015 JP 2015196610
(71) Applicant: Ricoh Company, Ltd., Tokyo 143-8555 (JP)
(72) Inventor: SUZUKI, Yuuki, Tokyo 143-8555 (JP); FUJITA, Kazuhiro, Tokyo 143-8555 (JP); CHIBA, Daiju, Tokyo 143-8555 (JP)
(74) Representative: J A Kemp
(86) International application number: PCT/JP2016/076862
(87) International publication number: WO 2017/056953

(57) **Abstract**

Disclosed is a display device for displaying a virtual image in front of an occupant of a vehicle. The display device includes a luminance adjusting unit configured to adjust luminance of an image to be displayed based on a luminance value of a target area that is a part of an image captured by an imaging unit, and an image display unit configured to display the image having the luminance adjusted by the luminance adjustment unit as a virtual image in a field of view of the occupant, where the target area includes at least a part of a virtual image displayable area.

## Description

### [Technical Field]

The disclosures discussed herein relate to a display device.

### [Background Art]

A display device, which is mounted on a vehicle and configured to display a virtual image in the field of view of a driver, is known in the art. Such a display device is generally known to be a "head-up display". In such a display device, the luminance of the virtual image to be displayed is adjusted in view of the luminance of the background. For example, Japanese Unexamined Patent Application Publication No. 2005-014788 discloses a technique for disposing an illuminance detector configured to detect brightness of ambient light in a surrounding environment so as to adjust brightness of a virtual image in accordance with the brightness of the ambient light detected by the illuminance detector (see, e.g., Patent Document 1).

### RELATED ART DOCUMENT

### PATENT DOCUMENT

[Patent Document 1] Japanese Unexamined Patent Application Publication No. 2005-014788

### [Summary of the Invention]

### [Problem to be Solved by Invention]

In the above technique, a solar radiation sensor such as a phototransistor or a photodiode is used as illuminance detector, which may provide a wider light receiving area. Thus, the solar radiation sensor inevitably acquires brightness of an area that overlaps with the virtual image other than the background area. Hence, this results in failing to obtain a correct brightness value of the area to be the background of the virtual image, making it difficult to appropriately adjust the brightness of the virtual image.

According to one aspect of the present invention, a display device capable of appropriately adjusting the luminance of a virtual image is provided.

### [Means to Solve the Problem]

According to an aspect of the disclosure, a display device for displaying a virtual image in front of an occupant of a vehicle is provided. The display device includes a luminance adjusting unit configured to adjust luminance of an image to be displayed based on a luminance value of a target area that is a part of an image captured by tan imaging unit; and an image display unit configured to display the image having the luminance adjusted by the luminance adjustment unit as a virtual image in a field of view of the occupant, where the target area includes at least a part of a virtual image displayable area.

### [Advantage of the Invention]

According to an aspect of embodiments, it is possible to provide a display device capable of appropriately adjusting the luminance of a virtual image.

### [Brief Description of Drawings]

FIG. 1 is a schematic diagram illustrating a display device according to a first embodiment;
FIG. 2 is a block diagram illustrating the display device according to the first embodiment;
FIG. 3 is a diagram illustrating a configuration of an image display unit;
FIG. 4 is an example of a flowchart illustrating a process of an image processor;
FIG. 5A is a diagram illustrating an example of a process of an image captured by an imaging unit;
FIG. 5B is a diagram illustrating an example of a process of the image captured by the imaging unit;
FIG. 5C is a diagram illustrating an example of a process of the image captured by the imaging unit;
FIG. 6 is a diagram illustrating a situation where a reference vehicle having an imaging unit and a display device and an oncoming vehicle pass each other;
FIG. 7A is a diagram illustrating a case where a vehicle is present in front of the reference vehicle;
FIG. 7B is a diagram illustrating a case where a vehicle is present in front of the reference vehicle; and
FIG. 7C is a diagram illustrating a case where a vehicle is present in front of the reference vehicle.

### [Mode for Carrying Out the Invention]

The following illustrates embodiments in detail with reference to the accompanying drawings. In the drawings, the same numerals are given to the same elements and overlapping descriptions may be omitted where appropriate.

### FIRST EMBODIMENT

### OUTLINE OF DISPLAY DEVICE

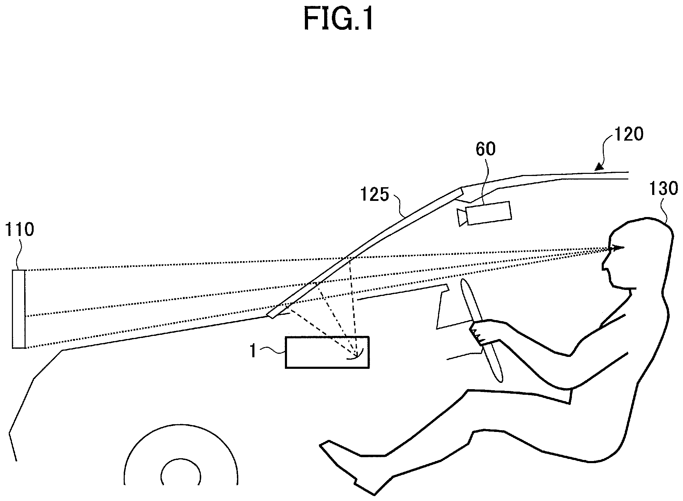

FIG. 1 is a schematic diagram illustrating a display device according to a first embodiment. Referring to FIG. 1, a display device 1 is mounted on a reference vehicle 120, which is generally known as a head-up display. The reference vehicle 120 is hereinafter defined as a vehicle on which the display device 1 is mounted so as to be differentiated from another vehicle such as an oncoming vehicle. The display device 1 has a function to project a predetermined image onto a front windshield 125 in front of a driver 130 to superimpose the projected image as a virtual image 110 in a field of view of a driver 130. The display device 1 may be disposed at any position in compliance with an interior design of the reference vehicle 120 and may be disposed on a dashboard inside the reference vehicle 120, for example. The display device 1 may be embedded in the dashboard of the reference vehicle 120. Note that the imaging unit 60 captures a scene in front of the reference vehicle 120 and delivers the captured scene to the display device 1.

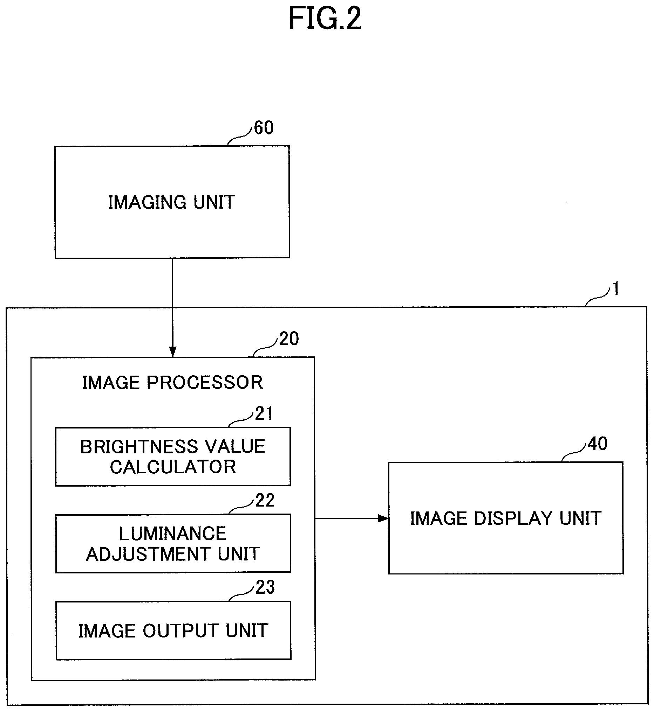

FIG. 2 is a block diagram illustrating the display device according to the first embodiment. Referring to FIGS. 1 and 2, the display device 1 includes an image processor 20 and an image display unit 40. The image processor 20 is configured to acquire from the imaging unit 60 an image in front of the reference vehicle 120.

The imaging unit 60 is disposed such that the imaging unit 60 captures, as the angle of view, the scene in front of the reference vehicle 120 including a scene overlapping with a virtual image 110 as viewed from the driver 130. The imaging unit 60 may be disposed at any position in compliance with an interior design of the reference vehicle 120, and may be disposed, for example, on a ceiling portion of the reference vehicle 120. The imaging unit 60 may be disposed on or above the dashboard inside the reference vehicle 120 or the like.

The imaging unit 60 has multiple pixels into which an area may be divided or multiple photosensors; specifically, the imaging unit 60 may be a monocular camera, a compound eye camera (stereo camera), an omnidirectional camera or the like which images an area in the vicinity of the vehicle in all directions. Note that an omnidirectional camera may synthesize multiple camera images to generate one image. The following describes an example where the imaging unit 60 is a monocular camera.

Note that the imaging unit 60 may be used for a function of a drive recorder or a sensing device in addition to a main function to acquire brightness for the display device 1. The function as a sensing device includes detection of vehicles or people in front of the reference vehicle, signs and the like, detection of distances from the reference vehicle to obstacles, and the like. In other words, the imaging unit 60 is not necessarily dedicated to the display device 1 only; an imaging unit generally used as a drive recorder or the like may be used as the imaging unit 60. However, this does not prohibit provision for the imaging unit dedicated to the display device 1 only.

The image processor 20 has a function to subject a display image to predetermined image processing based on an image in front of the reference vehicle 120 obtained from the imaging unit 60 and to output the resulting display image to the image display unit 40. Note that a display image indicates an image to be superimposed in the field of view of a driver 130 to be displayed as a virtual image 110. The display image is, for example, an image displaying a vehicle speed as a numerical value or the like (e.g., 60 km/h), which is generated based on vehicle speed information acquired from a vehicle speed sensor mounted on the reference vehicle 120. Alternatively, a display image may be an image previously stored in a ROM or the like.

The image processor 20 includes a brightness value calculator 21, a luminance adjustment unit 22, and an image output unit 23. The image processor 20 may be configured to include, for example, a CPU (Central Processing Unit), a ROM (Read Only Memory), a RAM (Random Access Memory), a main memory, and the like. In this case, various functions of the image processor 20 may be implemented by a program stored in a ROM or the like that is loaded into the main memory and executed by the CPU. However, a part or the whole of the image processor 20 may be implemented by hardware alone. Further, the image processor 20 may be physically composed of multiple devices or the like.

An image captured by the imaging unit 60 is input to the brightness value calculator 21 of the image processor 20. The brightness value calculator 21 extracts a specific image area (hereinafter referred to as a "target area") including an area in which the virtual image 110 may be displayed (hereinafter referred to as a "virtual image displayable area") from the image acquired by the imaging unit 60, and calculates the brightness value of the extracted target area. The brightness value calculator 21 outputs the calculated brightness value to the luminance adjustment unit 22. Note that the target area is a partial area of an image captured by the imaging unit 60 and includes at least a part of the virtual image displayable area.

The luminance adjustment unit 22 adjusts the luminance of the display image based on the brightness value obtained from the brightness value calculator 21. The luminance adjustment value selected by the luminance adjustment unit 22 is output to the image output unit 23.

Note that the imaging unit 60 may have a function to calculate the brightness value of the image captured by the imaging unit 60. In this case, the brightness value calculator 21 calculates (extracts) the brightness value of the target area including the virtual image displayable area from the brightness value obtained by the imaging unit 60.

In any case, the luminance adjusting unit 22 adjusts the luminance of the display image based on the brightness value of the target area including the virtual image displayable area of the image captured by the imaging unit 60. Note that details of brightness value calculation and luminance adjustment will be separately described.

The image output unit 23 instructs the image display unit 40 to perform appropriate light amount control based on the adjustment result of the luminance by the luminance adjustment unit 22 (the adjustment value of the luminance acquired from the luminance adjustment unit 22). For example, the image output unit 23 instructs the image display unit 40 to control the amount of laser light acting as a light source.

The image display unit 40 has a function to superimpose and display an image and acquired from the image processor 20 with luminance adjusted, as a virtual image 110 in the field of view of the driver 130. The image display unit 40 is a module capable of displaying an enlarged virtual image of an internally generated intermediate image with a mirror, a lens or the like so as to display an image with a sense of a predetermined distance from the viewpoint of the driver 130. As an embodiment of the image display unit 40, a panel projection image display unit, a laser scanning image display unit, and the like may be used; any of these image display units may be used in this embodiment. The following illustrates an example of the laser scanning image display unit 40.

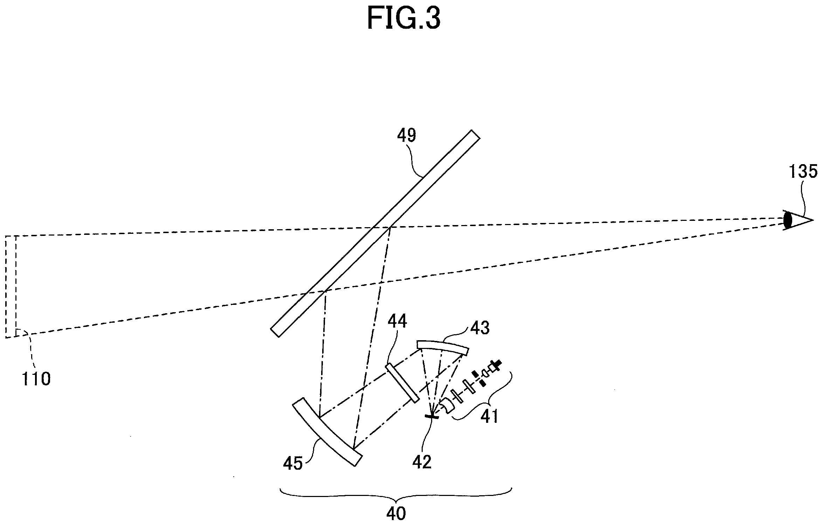

FIG. 3 is a diagram illustrating a configuration of an image display unit. Referring to FIG. 3, the image display unit 40 generally includes a light source unit 41, an optical deflector 42, a first mirror 43, a surface to be scanned 44, and a second mirror 45. In FIG. 3, reference numeral 135 denotes an eyeball of the driver 130 (hereinafter referred to as an "eyeball 135").

The light source unit 41 includes, for example, three laser light sources corresponding to RGB, a coupling lens, an aperture, a combining element, a lens, and the like, and configured to combine laser beams emitted from the three laser light sources and guide the combined laser beam toward a reflecting surface of the optical deflector 42. The laser beam guided to the reflecting surface of the optical deflector 42 is two-dimensionally deflected by the optical deflector 42.

As the optical deflector 42, for example, one micro-mirror swinging with respect to two orthogonal axes, two micro-mirrors swinging with respect to or rotating around one axis, and the like may be used. The optical deflector 42 may be, for example, MEMS (Micro Electro Mechanical Systems) manufactured by a semiconductor process or the like. The optical deflector 42 may be driven by, for example, an actuator using the deforming force of the piezoelectric element as a driving force.

The light beam two-dimensionally deflected by the optical deflector 42 is incident on the first mirror 43 and is reflected by the first mirror 43 to render a two-dimensional image on the surface to be scanned 44. The surface to be scanned 44 is a surface having transparency through which a light flux reflected by the first mirror 43 enters to form a two-dimensional image. The light flux emitted from the surface to be scanned 44 is enlarged and displayed by the second mirror 45 and a semitransparent mirror 49 (combiner). As the second mirror 45, for example, a concave mirror may be used. The image display unit 40 may include transparent optical elements such as lenses and prisms.

The semitransparent mirror 49 is a mirror having a transmittance in a visible range of approximately 10 to 70%. The semitransparent mirror 49 has a reflecting surface on one side of the semitransparent mirror 49, on which the light flux reflected by the second mirror 45 is incident. The reflecting surface may have a dielectric multilayer film, a wire grid, or the like formed thereon. The reflecting surface of the semitransparent mirror 49 may selectively reflect a wavelength band of the light flux emitted from the laser. That is, the reflecting surface of the semitransparent mirror 49 may have reflection peaks and reflection bands including light emitted from three lasers corresponding to RGB, or the reflecting surface of the semitransparent mirror 49 may be formed so as to strengthen the reflectance for a specific deflection direction.

For example, the semitransparent mirror 49 may be integrated with a windshield 125 (see FIG. 1) of the reference vehicle 120. In the reference vehicle 120, the image display unit 40 may be arranged in front of the driver 130 so as to allow the light beam reflected by the reflecting surface of the semitransparent mirror 49 to be incident on the eyeball 135 of the driver 130 in the driver's seat. The two-dimensional image of the surface to be scanned 44 is visually recognized by the driver 130 as a virtual image 110 that is enlarged at a predetermined position ahead of the reflecting surface of the semitransparent mirror 49.

In the laser scanning image display unit 40 illustrated in FIG. 3, the light amount control of the laser light sources constituting the light source unit 41 is performed based on the adjustment value of the luminance adjusted by the luminance adjustment unit 22 in accordance with the instructions from the image output unit 23. As a result, a display image with an appropriate luminance is superimposed and displayed as a virtual image 110 in the field of view of the driver 130.

In the display device 1, the height of the virtual image displayable area may be varied with the height difference of the driver 130 and the like. The brightness value calculator 21 may change the height of the target area to be extracted in accordance with the change in the height of the virtual image displayable area. This makes it possible to reduce the difference between the calculated brightness value and the visual brightness perceived by the driver so as to appropriately determine the luminance of the display image even when the height of the virtual image displayable area is changed.

### BRIGHTNESS VALUE CALCULATION AND BRIGHTNESS ADJUSTMENT

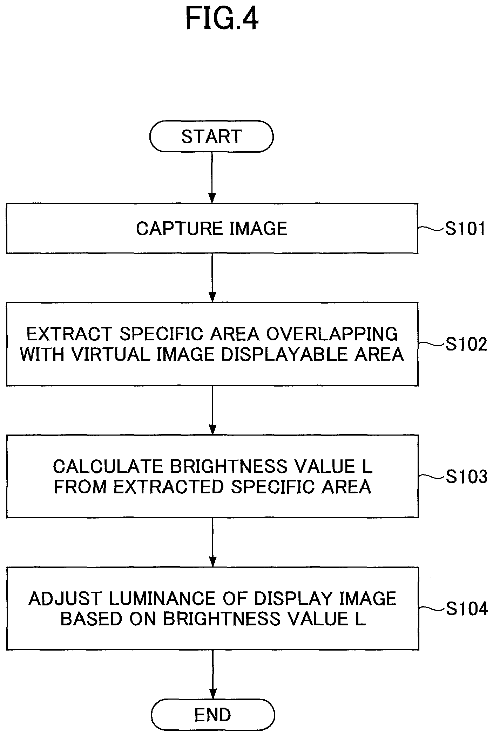

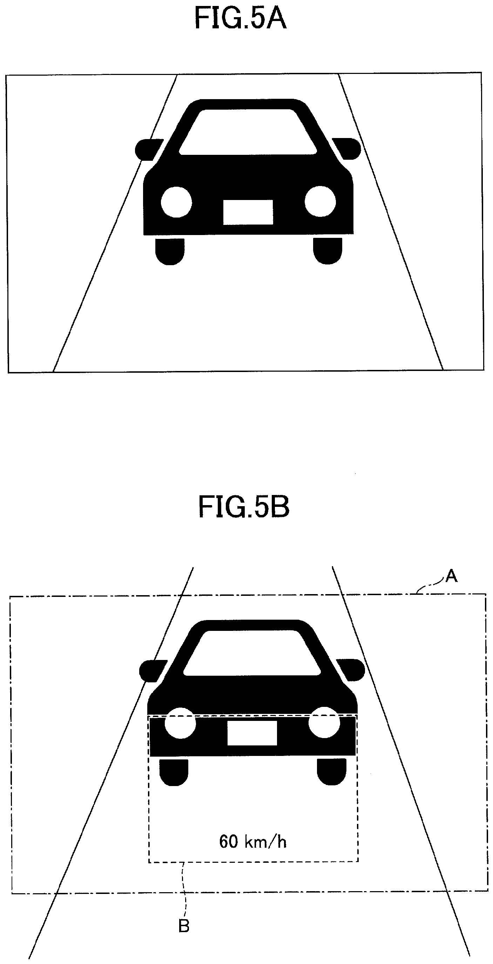

FIG. 4 is an example of a flowchart illustrating a process performed by an image processor. FIGS. 5A to 5C are diagrams each illustrating an example of a process of an image captured by an imaging unit. Referring to FIG. 4 and FIGS. 5A to 5C, capturing an image by the imaging unit 60 and processing by the image processor 20 that has acquired the image from the imaging unit 60 will be described.

First, in step S101, the imaging unit 60 captures an image of a scene in front of the reference vehicle 120. FIG. 5A illustrates an example of an image captured by the imaging unit 60. The image of FIG. 5A also includes a scene overlapping with the virtual image 110 as viewed from the driver 130. That is, the image of FIG. 5A includes a virtual image displayable area in which the display device 1 is capable of displaying the virtual image 110.

Next, in step S102, the brightness value calculator 21 acquires the image captured by the imaging unit 60, and extracts a target area that overlaps with the virtual image displayable area from the acquired image. FIG. 5B illustrates a relationship between an imaging area A captured by the imaging unit 60 and a virtual image displayable area B in which the display device 1 is capable of displaying the virtual image 110. As described above, the image captured by the imaging unit 60 also includes an image for the virtual image displayable area B.

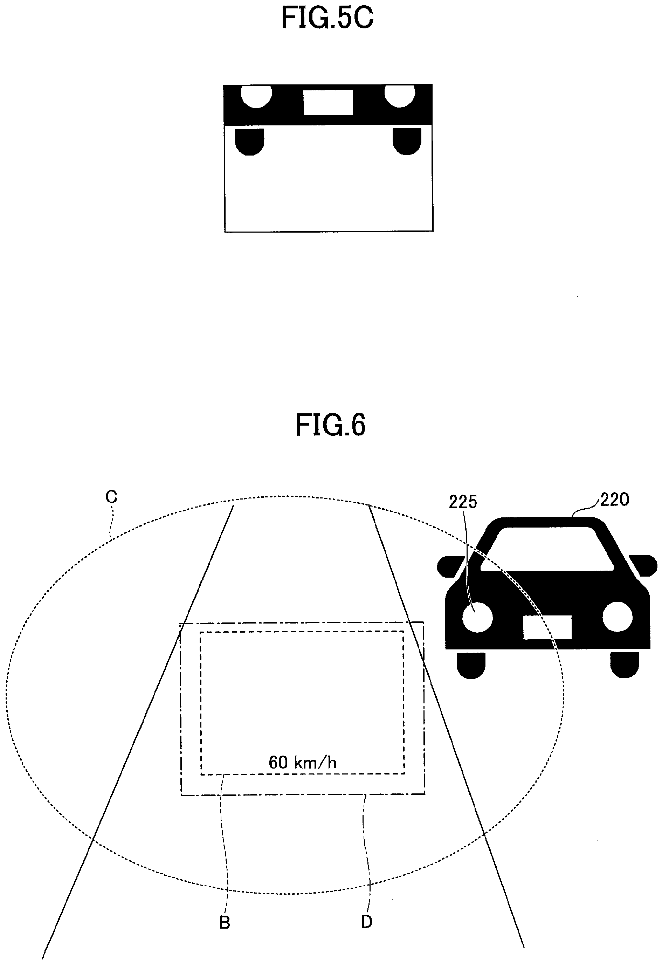

The brightness value calculator 21 extracts from the image of FIG. 5A a target area (specific area) that overlaps with the virtual image displayable area B illustrated in FIG. 5B. FIG. 5C illustrates an example of the extracted target area. Note that in a case where characteristics such as an installation position, angle of view, orientation, and the like of the imaging unit 60 and characteristics such as angle of view, depression angle, installation position, and the like of the display device 1 are known, the target area overlapping with the virtual image displayable area B illustrated in FIG. 5B in the image of FIG. 5A becomes apparent. Note that the target area to be extracted may be an area completely matching the virtual image displayable area B; however, a wider target area may be extracted with a margin around the virtual image displayable area B.

Next, in step S103, the brightness value calculator 21 calculates a brightness value L from the extracted target area. For example, when the image captured by the imaging unit 60 is in gray scale, the brightness value L may be calculated using a gradation value of each pixel. When the image captured by the imaging unit 60 is a color image, the brightness value L may be calculated using an RGB value of each pixel. In either case, the brightness value L may be calculated using a method of averaging or integrating values of the pixels, a method of dividing an image area, or the like.

Next, in step S104, the luminance adjustment unit 22 adjusts the luminance of the display image (virtual image) based on the brightness value L calculated by the brightness value calculator 21. For example, the luminance adjustment unit 22 stores a correspondence relationship between the brightness value L and the luminance of the virtual image as a correction table or the like in advance in a ROM or the like, and selects an adjustment value for appropriate luminance corresponding to the brightness value L based on the stored information. The brightness adjusting unit 22 may select an appropriate luminance adjustment value corresponding to the brightness value L using a predetermined relational expression. The luminance adjustment value selected by the luminance adjustment unit 22 is output to the image output unit 23.

Note that a specific effect provided by the display device 1 will be described by demonstrating an example of a specific situation. FIG. 6 is a diagram illustrating an example of a situation in which the reference vehicle equipped with the imaging unit and the display device and the oncoming vehicle pass each other, and specifically illustrates a situation where the oncoming vehicle 220 passes the reference vehicle with the oncoming vehicle 220 having its the headlights 225 on.

In FIG. 6, in a conventional illuminance detector (e.g., photodiode), the luminance in front of the vehicle is captured in a wider area such as area C, for example. Hence, even when the light of the headlights 225 do not directly enter the eyes of the driver, the illuminance detector inevitably detects the light of the headlights 225, and calculates a brightness value that differs from the visual brightness perceived by the driver. As a result, with the conventional illuminance detector, correct luminance of the display image appropriate for the driver will not be determined. Further, when the angle of light capture is narrowed in order to avoid such a problem, another problem arises that the acquirable amount of light decreases.

In the display device 1, the target area D including the virtual image displayable region B is extracted, and the brightness value L of the target area D is calculated from the extracted image information of the target area D. Thus, this makes it possible to reduce the difference between the calculated brightness value L and the visual brightness as seen by the driver, thereby appropriately determining the luminance of the display image. As a result, it is possible to obtain a virtual image 110 of appropriate visual brightness that may be easily perceived by the driver 130.

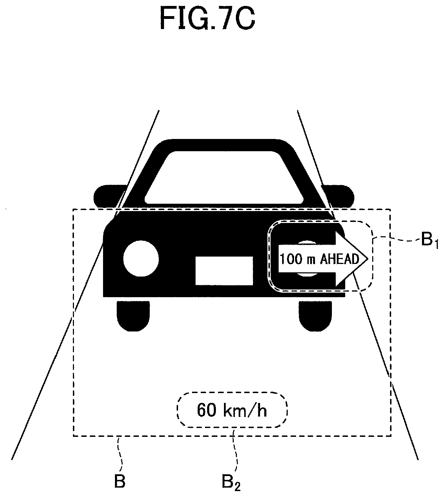

In the above description, the brightness value calculator 21 extracts the target area D including the entirety of the virtual image displayable area B to calculate the brightness value L of the extracted target area D. However, the method of calculating the brightness value L of the extracted target area D is not limited to this example. The brightness value calculator 21 may extract a target area including at least a part of the virtual image displayable area B to calculate the brightness value L of the extracted target area. For example, a possible background portion of a virtual image B₁ of the virtual image displayable area B in later illustrated FIG. 7C may be extracted as a target area, and the brightness value L of the extracted target area may be calculated accordingly. In such a case, the luminance adjustment unit 22 may adjust the luminance of the virtual image B₁ based on the brightness value L of the target area that is the background of the virtual image B₁ calculated by the brightness value calculator 21.

### SECOND EMBODIMENT

The following describes a second embodiment illustrating an example in which the luminance of the display image is two-dimensionally adjusted using extracted image information of the target area. Note that the same components described in the previously described embodiments may be omitted from the second embodiment.

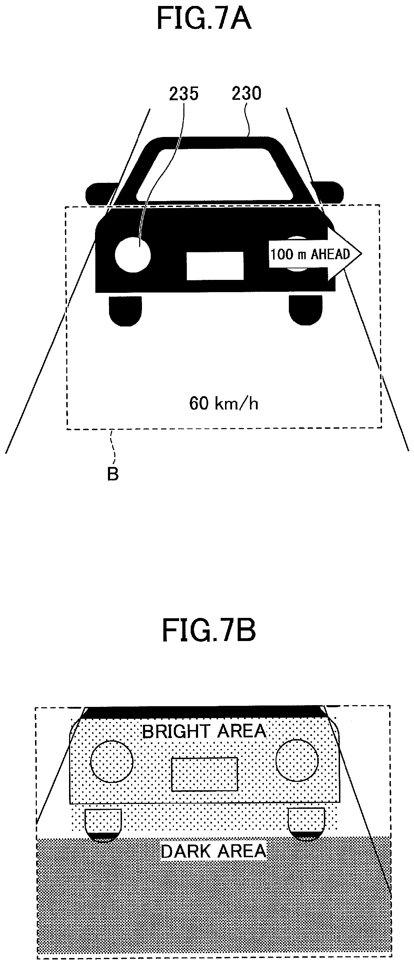

FIGS. 7A to 7C are diagrams each illustrating a case where a vehicle is present in front of the reference vehicle. FIG. 7A depicts a situation in which a taillight 235 of a vehicle in front 230 overlaps a part of the virtual image displayable area B. In such a situation as illustrated in FIG. 7A, it is preferable to intensively increase the luminance of a portion of the virtual image that overlaps with the taillight 235 as the light source rather than uniformly increasing the luminance of the overall virtual image.

However, since the conventional illuminance detector is configured to uniformly incorporate the luminance of an area in front of a vehicle, the conventional illuminance detector fails to detect a portion of the virtual image that overlaps with the taillight 235.

In the present embodiment, the brightness value calculator 21 calculates a two-dimensional distribution of brightness using the image information of the virtual image displayable area B. Specifically, a two-dimensional distribution of the brightness of an image in the virtual image displayable area B is calculated by referring to each of the pixel values of the image in the virtual image displayable area B as illustrated in FIG. 7B. As a result, it is possible to distinguish between a bright area and a dark area, which makes it possible for the luminance adjustment unit 22 to adjust the luminance of the image by increasing the luminance of only the virtual image B₁ displayed in the bright area while allowing the luminance of a virtual image B₂ displayed in the dark area to remain unchanged as illustrated in FIG. 7C.

As described above, in the second embodiment, the luminance adjustment unit 22 adjusts the luminance of the display image in two or more areas of the target area individually, based on a two-dimensional distribution of the brightness of the target area. As a result, it is possible to obtain virtual images of an appropriate brightness at which the driver 130 is able to see easily, even when displaying two or more virtual images at the same time.

Note that in the second embodiment, "the virtual image displayable area B = the target area" is defined as an example; however, the present invention is not limited to this example.

The embodiments of the present invention have been described in detail above; however, the present invention is not limited to a specific one of the embodiments, and various modifications and changes may be made within the scope described in the claims. In addition, it is also possible to combine part or all of the above-described embodiments.

For example, the above-described embodiments illustrate an example in which the display device 1 is disposed at a position close to the driver 130; however, alternatively, or in addition thereto, a display device for an occupant of the reference vehicle other than the driver 130 may be provided in a passenger seat, for example. For example, it is assumed that a display device for an occupant in a passenger seat is provided in order to display nearby retail information as a virtual image to the occupant in this passenger seat. The display device 1 may display a virtual image in front of the occupant (including the driver) of the vehicle in such a manner.

In addition, the above-described embodiments illustrate an example in which three lasers are used in the image display unit 40; however, a single color image may be formed using a single laser. In such a case, a combining element or the like is unnecessary.

Further, the display device according to the present embodiments may also be used as a unit for displaying information that may be used apart from a vehicle such as a car.

The present invention is not limited to the above embodiments. In other words, one skilled in the art can make various changes to the present invention, with reference to the known conventional art, without departing from the scope of the present invention. It is needless to say that such changes are still included in the scope of the present invention as long as the configurations of the wireless communication apparatus and the mobile device of the present invention are provided.

The present application is based on and claims the benefit of priority of Japanese Priority Application No. 2015-196610, filed on October 2, 2015, the entire contents of which are hereby incorporated by reference.

### [Description of Reference Symbols]

- 1: display device
- 20: image processor
- 21: brightness value calculator
- 22: luminance adjustment unit
- 23: image output unit
- 40: image display unit
- 41: light source unit
- 42: optical deflector
- 43: first mirror
- 44: surface to be scanned
- 45: second mirror
- 49: semitransparent mirror
- 60: imaging unit
- 110: virtual image
- 120: reference vehicle
- 125: windshield
- 130: driver
- 135: driver's eyeball
- 220: oncoming vehicle
- 225: headlight
- 230: front vehicle
- 235: taillight

## Claims

1. A display device for displaying a virtual image in front of an occupant of a vehicle, the display device comprising:
a luminance adjusting unit configured to adjust luminance of an image to be displayed based on a luminance value of a target area that is a part of an image captured by an imaging unit; and
an image display unit configured to display the image having the luminance adjusted by the luminance adjustment unit as a virtual image in a field of view of the occupant, wherein
the target area includes at least a part of a virtual image displayable area.

2. The display device according to claim 1, further comprising:
a brightness value calculator configured to extract the target area from the image captured by the imaging unit to calculate a brightness value of the target area.

3. The display device according to claim 1 or 2, wherein
the target area includes the virtual image displayable area in entirety.

4. The display device according to any one of claims 1 to 3, wherein
the luminance adjusting unit adjusts the luminance of the image to be displayed in a plurality of areas of the target area individually, based on a two-dimensional distribution of the brightness of the target area.

5. The display device according to any one of claims 1 to 4, wherein
a height of the virtual image displayable area is changeable, and
a height of the target area is changed corresponding to a change in the height of the virtual image displayable area.

6. The display device according to any one of claims 1 to 5, wherein
the imaging unit is a stereo camera.

7. The display device according to any one of claims 1 to 5, wherein
the imaging unit is a monocular camera.

8. The display device according to any one of claims 1 to 5, wherein
the imaging unit is an omnidirectional camera configured to capture an image of an area in vicinity of the vehicle in all directions.
